# EUROPÄISCHE PATENTSCHRIFT

(11) **EP 2 841 230 B1**
(45) Veröffentlichungstag und Bekanntmachung des Hinweises auf die Patenterteilung: **28.03.2018**
(21) Anmeldenummer: 13714559.5
(22) Anmeldetag: 06.04.2013
(51) Int. Cl.: B23K 26/08, B23K 26/36, B41C 1/05

(54) **VERFAHREN UND VORRICHTUNG ZUR BEARBEITUNG EINES ZYLINDRISCHEN WERKSTÜCKS**
METHOD AND DEVICE FOR MACHINING A CYLINDRICAL WORKPIECE
PROCÉDÉ ET DISPOSITIF POUR USINER UNE PIÈCE CYLINDRIQUE

(30) Priorität: 26.04.2012 DE 102012008206
(43) Veröffentlichungstag der Anmeldung: 04.03.2015
(73) Patentinhaber: HELL Gravure Systems GmbH & Co. KG, 24148 Kiel (DE)
(72) Erfinder: BECKER, Karsten, 24306 Rathjensdorf (DE); RESSEL, Peter, 24232 Schönkirchen (DE)
(74) Vertreter: Thomas, Götz
(86) Internationale Anmeldenummer: PCT/EP2013/001024
(87) Internationale Veröffentlichungsnummer: WO 2013/159866

(56) Entgegenhaltungen:
- EP-A1- 0 919 371
- EP-A2- 0 580 393
- EP-A2- 1 395 037
- EP-A2- 2 039 529
- US-A1- 2008 134 508

## Beschreibung

Die Erfindung betrifft ein Verfahren und eine Vorrichtung zur Laserdirektgravur einer zylindrischen Druck- oder Prägeform durch Materialabtrag mit mindestens einem Laserstrahl gemäß dem Oberbegriff der Ansprüche 1 bzw. 12.

Ein Verfahren und eine Vorrichtung der eingangs genannten Art sind aus der DE 10 2010 056 306 B4 bekannt. Die zumeist als Graviermaschine bezeichnete Vorrichtung umfasst einen Drehantrieb, mit dem ein zuvor in die Vorrichtung eingespannter Druck- oder Prägezylinder in Drehung versetzt werden kann, einen Laser zur Erzeugung des Laserstrahls, mit dem an der Oberfläche des Druck- oder Prägezylinders Material abgetragen werden soll, mindestens einen Gravierwagen, der mittels einer Spindel und eines Spindelantriebs in axialer Richtung des Druck- oder Prägezylinders an diesem entlang bewegt werden kann, sowie einen auf dem Gravierwagen montierten Gravierkopf, von dem aus der vom Laser erzeugte Laserstrahl auf die zu gravierende Oberfläche des Druck- oder Prägezylinders gelenkt wird.

Bei sämtlichen bekannten Graviermaschinen wird der Druck- oder Prägezylinder während der Gravur mit derselben Drehrichtung gedreht. Auch der Gravierwagen wird während der Gravur, d.h. während die Oberfläche des Druck- oder Prägezylinders mit dem Laserstrahl beaufschlagt wird, stets in derselben Richtung am Druck- oder Prägezylinder entlang bewegt. Danach wird der Gravurwagen in der entgegengesetzten Richtung in eine Ausgangsposition zurück bewegt.

Insbesondere bei der Gravur von Werkstücken in Form von Prägezylindern kommt es nicht selten vor, dass die in die zylindrische Oberfläche des Werkstücks eingravierten Vertiefungen eine Tiefe von mehreren Millimetern und die bei der Gravur stehen bleibenden Erhebungen eine entsprechende Höhe über dem Grund der Vertiefungen besitzen sollen. Jedoch kann insbesondere bei der Gravur von zylindrischen Werkstücken aus Metall am Auftreffpunkt des über die Werkstückoberfläche bewegten Laserstrahls nur eine relative geringe Materialstärke abgetragen werden, je nach Material des Prägezylinders zwischen 20 µm und 50 µm. In diesem Fall müssen die zu gravierenden Oberflächenbereiche des Werkstücks, das heißt die vertieften Bereiche des späteren Prägezylinders, mehrmals mit dem Laserstrahl beaufschlagt werden, um das Material bis zur gewünschten Tiefe abzutragen. Mit anderen Worten sind mehrere Gravierdurchgänge erforderlich, das heißt Bearbeitungsvorgänge, bei denen sich der Gravierwagen mit dem Gravierkopf einmal an dem mit dem Gravierkopf zu gravierenden Oberflächenbereich des Prägezylinders vorbei bewegt. Wenn die Graviermaschine nur einen Gravierwagen und einen Gravierkopf besitzt, erstreckt sich der Bewegungsweg des Gravierkopfs während eines Gravierdurchgangs über die gesamte axiale Länge des Prägezylinders, die graviert werden soll. Wenn die Graviermaschine mehrere Gravierwagen und Gravierköpfe besitzt, die jeweils zur Gravur von einem oder mehreren Nutzen des Prägezylinders dienen, erstreckt sich der Bewegungsweg des Gravierkopfs bei jedem Gravierdurchgang über die gesamte axiale Länge des Nutzens oder der Nutzen, die mit dem Gravierkopf graviert werden sollen. Da bei den bekannten Graviermaschinen der Gravierwagen nach jedem Gravierdurchgang in seine Ausgangsposition zurück bewegt wird, kann sich bei mehreren Gravierdurchgängen die Bearbeitungszeit erheblich verlängern.

Außerdem wird bei der Lasergravur eines Werkstücks gewöhnlich nur ein Teil des abgetragenen Materials an den Auftreffpunkten des Laserstrahls vollständig verdampft, während ein anderer Teil in Abhängigkeit von der Zusammensetzung des Materials verflüssigt oder verbrannt wird. Dieser gewöhnlich als Schmelzauswurf oder Schmauch bezeichnete Teil des Materials neigt trotz einer Absaugung dazu, sich mindestens teilweise auf der bereits gravierten oder noch ungravierten Oberfläche des Werkstücks niederzuschlagen.

Dabei verteilt sich der Schmelzauswurf oder Schmauch in Bezug zum Auftreffpunkt des Laserstrahls allerdings nur dann ziemlich gleichmäßig in alle Richtungen, wenn punktförmige Vertiefungen in der Oberfläche des Werkstücks ausgehoben werden. Dort, wo die Gravur entlang einer einzelnen Spur erfolgt, wird der Schmelzauswurf oder Schmauch bevorzugt nur in derjenigen Richtung ausgeworfen, die zu der Bewegungsrichtung des Laserstrahls entlang der Spur entgegengesetzt ist. Die Ursache dafür liegt darin, dass in dieser Richtung die bereits ausgehobene Spur einem sich infolge von thermischer Ausdehnung vom Auftreffpunkt des Laserstrahls weg bewegenden Gas- und Partikelstrom den geringsten Strömungswiderstand entgegensetzt.

Dort, wo das Material auf größeren zusammenhängenden Flächen spurweise abgetragen wird, wird der Schmelzauswurf oder Schmauch bezogen auf den Auftreffpunkt des Laserstrahls bevorzugt nicht nur in einer zur Bewegungsrichtung des Laserstrahls entgegengesetzten Richtung ausgeworfen, wie zuvor beschrieben, sondern darüber hinaus auch noch in einer Richtung, die zur axialen Bewegungsrichtung des Gravierwagens entlang des Werkstücks entgegengesetzt ist. Die Ursache dafür liegt darin, dass dem Gas- und Partikelstrom infolge des Abtrags einer vorangehenden Spur oder Spuren auch in dieser Richtung ein geringerer Strömungswiderstand entgegengesetzt wird.

Wenn das Werkstück bei jedem Gravierdurchgang mit derselben Drehrichtung gedreht und der Gravierwagen mit dem Gravierkopf bei jedem Gravierdurchgang mit derselben Vorschub- oder Bewegungsrichtung am Werkstück entlang bewegt wird, während mit dem Laserstrahl Material vom Werkstück abgetragen wird, führt die ungleichmäßige Ausbreitung des Schmelzauswurf oder Schmauchs dazu, dass sich dieser überwiegend an denjenigen Flanken von Erhebungen niederschlägt, die entweder in eine zur Drehrichtung des Werkstücks entgegengesetzte Richtung oder in Vorschubrichtung des Gravierwagens weisen, während sich an den anderen Flanken kein Material niederschlägt.

Insbesondere dann, wenn die Erhebungen steile Flanken aufweisen, was beim Prägen zumeist erwünscht ist, kann dies dazu führen, dass sich an den zuerst genannten Flanken soviel Schmelzauswurf oder Schmauch niederschlägt, dass diese Flanken infolge des Niederschlags einen flacheren Neigungswinkel besitzen, was unerwünscht ist.

Zwar wird versucht, den Niederschlag durch eine Reinigung des Werkstücks nach der Gravur zu beseitigen. Jedoch gelingt dies meist nur unvollständig und dauert umso länger, je größer die Schichtdicken der zu beseitigenden Niederschläge sind.

Ähnliches gilt auch für die Gravur von Druckzylindern, die zum Bedrucken von Wellpappe im Flexodruck eingesetzt werden, weil bei diesen Druckzylindern in den vertieften nicht-druckenden Bereichen durch die Gravur bis zu einer Tiefe von 2 Millimetern oder mehr Material abgetragen werden muss. Da bei der Gravur von Flexodruckzylindern pro Durchgang etwa 0,5 mm abgetragen werden, sind auch hier vier bis fünf Gravurdurchgänge erforderlich.
Aus der US 2008/0134508 A1 ist ein Verfahren zur Bearbeitung von zylindrischen Rohren mit einem Laserstrahl bekannt, bei dem mit dem Laserstrahl eine Reihe von Schlitzen in einer ersten axialen Bearbeitungsrichtung in das Rohr eingebracht wird und bei dem das Rohr dann um einen Winkel gedreht wird, um mit dem Laserstrahl anschließend eine weitere Reihe von Schlitzen in einer entgegengesetzten axialen Bearbeitungsrichtung in das Rohr einzubringen.

Aus der EP 2 039 529 A2 sind ein Verfahren und eine Vorrichtung gemäß dem Oberbegriff des Anspruchs 1 bzw. des Anspruchs 12 zur Bearbeitung von Werkstücken mit einem Laserstrahl bekannt. Bei den Werkstücken handelt es sich um Sticheltiefdruckplatten, die auf der Oberfläche eines zylindrischen Körpers befestigt sind. Damit die Bearbeitung mit dem Laserstrahl stets innerhalb der Begrenzungen von einem der Werkstücke erfolgt, dreht sich der zylindrische Körper nicht mit konstanter Geschwindigkeit, sondern wird abhängig von der zu bearbeitenden Kontur vor- und rückwärts gedreht, um mittels des Laserstrahls zum Beispiel eine gezackte Linie oder einen Kreis in eines der Werkstücke einzubringen.

Ausgehend hiervon liegt der Erfindung die Aufgabe zugrunde, ein Verfahren und eine Vorrichtung der eingangs genannten Art dahingehend zu verbessern, dass ein bei der Lasergravur entstehender Niederschlag von Schmelzauswurf oder Schmauch gleichmäßiger auf alle Flanken der beim Materialabtrag stehen bleibenden Erhebungen verteilt werden kann und dass bevorzugt zugleich auch der für mehrere Gravierdurchgänge erforderliche Zeitaufwand verringert werden kann.

Diese Aufgabe wird bei dem erfindungsgemäßen Verfahren durch die Merkmale im Patentanspruch 1 und bei der erfindungsgemäßen Vorrichtung durch die Merkmal im Patentanspruch 12 gelöst. Wenn das zylindrische Werkstück teilweise mit der ersten Drehrichtung und teilweise mit der zweiten Drehrichtung gedreht wird, während mit dem Laserstrahl Material vom Werkstück abgetragen wird, wird der Schmelzauswurf oder Schmauch an den bei der Gravur stehen bleibenden Erhebungen sowohl auf die in Drehrichtung des Werkstücks weisenden Flanken und die in eine entgegengesetzte Richtung weisenden Flanken und damit gleichmäßiger verteilt.

Wenn der Gravurvorschub des Bearbeitungsorgans entlang des Werkstücks teilweise in der ersten Bewegungsrichtung und teilweise in der zweiten Bewegungsrichtung erfolgt, wobei in beiden Bewegungsrichtungen mit dem Laserstrahl Material vom Werkstück abgetragen wird, wird der Schmelzauswurf oder Abbrand an den stehen bleibenden Erhebungen gleichmäßig auf die in die erste Bewegungsrichtung und die in die zweite Bewegungsrichtung weisenden Flanken verteilt.

Erfindungsgemäß wird die Druck- oder Prägeform während der Bearbeitung mit dem Laserstrahl sowohl in der ersten und in der zweiten Drehrichtung mit einer konstanten, vorteilhaft identischen Drehgeschwindigkeit gedreht und das Bearbeitungsorgan sowohl in der ersten und in der zweiten Bewegungsrichtung mit einer konstanten, vorteilhaft identischen Bewegungsgeschwindigkeit am Werkstück entlang bewegt, so dass sich ungeachtet der Drehrichtung des Werkstücks und der Bewegungsrichtung des Bearbeitungsorgans der Auftreffpunkt des Laserstrahls oder Bearbeitungsfleck stets entlang von schraubenförmigen Bahnen über die Oberfläche des Werkstücks bewegt, die vorteilhaft dieselbe Steigung besitzen, jedoch wahlweise alle gleichläufig, d.h. entweder rechts- oder linksläufig, oder jeweils zur Hälfte gegenläufig, d.h. rechts- und linksläufig sein können.

Eine bevorzugte Ausgestaltung der Erfindung sieht vor, dass bei mehreren aufeinander folgenden Gravurdurchgängen das Werkstück abwechselnd mit unterschiedlichen Drehrichtungen um die Drehachse gedreht und/oder das Bearbeitungsorgan abwechselnd mit unterschiedlichen Bewegungsrichtungen parallel zur Drehachse am Werkstück entlang bewegt wird, während zugleich mit dem Laserstrahl Material vom Werkstück abgetragen wird.

Wenn nach jedem Gravierdurchgang die Bewegungsrichtung des Bearbeitungsorgans umgekehrt wird, kann die Bearbeitungszeit erheblich reduziert werden, da das Bearbeitungsorgan nicht mehr nach jedem Gravierdurchgang zum Ausgangspunkt zurückbewegt werden muss. Wie bereits eingangs erwähnt, erstreckt sich der Bewegungsweg des Bearbeitungsorgans bei jedem Gravierdurchgang über die gesamte axiale Länge des Werkstücks, wenn dieses mit einem einzigen Bearbeitungsorgan bearbeitet wird. Dort, wo gleichzeitig von mehreren Bearbeitungsorganen Material vom Werkstück abgetragen wird, erstreckt sich der Bewegungsweg jedes Bearbeitungsorgans bei einem Gravierdurchgang über die axiale Länge des Werkstücks, die mit dem Bearbeitungsorgan bearbeitet werden soll.

Dabei wird beim ersten Gravierdurchgang vorteilhaft das Werkstück mit der ersten Drehrichtung gedreht und das Bearbeitungsorgan mit der ersten Bewegungsrichtung am Werkstück entlang bewegt, während beim zweiten Gravierdurchgang das Werkstück mit der zweiten Drehrichtung gedreht und das Bearbeitungsorgan mit der zweiten Bewegungsrichtung am Werkstück entlang bewegt wird. Auf diese Weise kann das ausgeworfene Material in nur zwei Gravierdurchgängen gleichmäßig auf alle Flanken von Erhebungen verteilt und zugleich die Bearbeitungszeit verkürzt werden. Bei eventuell nachfolgenden Gravierdurchgängen wird zweckmäßig dieselbe Bewegungsfolge gewählt.

In diesem Fall sieht eine weitere bevorzugte Ausgestaltung der Erfindung vor, am Ende jedes Gravierdurchgangs die Lese-Richtung umzukehren, in der in einem Gravurdatenspeicher gespeicherte Gravurdaten ausgelesen werden, so dass die Gravurdaten in umgekehrter Reihenfolge wie beim vorangehenden Gravurdurchgang ausgelesen werden. Wenn die Gravurdaten wie üblich zeilenweise ausgelesen werden, wobei die Gravurdaten einer Gravurzeile den Daten entsprechen, die während einer Umdrehung des Werkstücks ausgelesen werden, bedeutet dies, dass zum einen die Reihenfolge der ausgelesenen Daten in jeder Gravurzeile und zum anderen auch die Reihenfolge der ausgelesenen Gravurzeilen umgekehrt wird.

Alternativ dazu ist es aber auch möglich, die Drehrichtung des Werkstücks nur bei jedem zweiten Gravierdurchgang umzukehren, während die Bewegungsrichtung des Bearbeitungsorgans entlang des Werkstücks bei jedem Gravierdurchgang umgekehrt wird.

In diesem Fall wird beim ersten Gravierdurchgang das Werkstück mit der ersten Drehrichtung gedreht und das Bearbeitungsorgan mit der ersten Bewegungsrichtung am Werkstück entlang bewegt, beim zweiten Gravierdurchgang die Drehrichtung beibehalten und nur die Bewegungsrichtung des Bearbeitungsorgans umgekehrt, vor dem dritten Gravierdurchgang sowohl die Drehrichtung und die Bewegungsrichtung des Bearbeitungsorgans umgekehrt und beim vierten Gravierdurchgang wieder die Drehrichtung beibehalten und die Bewegungsrichtung des Bearbeitungsorgans umgekehrt. Auf diese Weise kann das ausgeworfene Material in insgesamt vier Gravierdurchgängen gleichmäßig auf alle Flanken von Erhebungen verteilt und ebenfalls die Bearbeitungszeit verkürzt werden.

Wenn die Drehrichtung des Werkstücks bei einer Umkehr der Bewegungsrichtung des Bearbeitungsorgans beibehalten wird, wird beim Auslesen der Gravurdaten nur die Lese-Richtung oder Reihenfolge umgekehrt, in der die im Gravurdatenspeicher gespeicherten Gravurzeilen ausgelesen werden, während die Lese-Richtung oder Reihenfolge, in der die Gravurdaten jeder Gravurzeile ausgelesen werden, unverändert bleibt.

Gemäß einer weiteren bevorzugten Ausgestaltung der Erfindung wird das Material des Werkstücks schichtweise abgetragen, wobei ein Teil der Schichten während einer Drehung des Werkstücks in der ersten Drehrichtung und ein Teil der Schichten während einer Drehung des Werkstücks in der zweiten Drehrichtung abgetragen werden. Zugleich werden zweckmäßig ein Teil der Schichten während einer Bewegung des Bearbeitungsorgans in der ersten Bewegungsrichtung und ein Teil der Schichten während einer Bewegung des Bearbeitungsorgans in der zweiten Bewegungsrichtung abgetragen. Vorteilhaft erfolgt der Abtrag benachbarter Schichten bei unterschiedlicher Drehrichtung und unterschiedlicher Bewegungsrichtung des Bearbeitungsorgans.

Vor dem Abtrag einer weiteren Schicht wird zweckmäßig jeweils die Fokuseinstellung einer Bearbeitungsoptik angepasst, mit deren Hilfe der Laserstrahl auf der abzutragenden Schicht fokussiert wird.

Das erfindungsgemäße Verfahren ist vor allem dann von Vorteil, wenn zur Gravur eines zylindrischen Werkstücks mit einem Laserstrahl mehrere Gravierdurchgänge erforderlich sind. Das Verfahren wird daher hauptsächlich dort eingesetzt werden, wo an der Oberfläche von zylindrischen Werkstücken mit mindestens einem Laserstrahl relativ tiefe Vertiefungen ausgehoben werden sollen, wie bei der Lasergravur von Prägeformrohlingen oder zylindrischen Druckformrohlingen für den Flexodruck auf Wellpappe.

Im Folgenden wird die Erfindung anhand eines in der Zeichnung dargestellten Ausführungsbeispiels näher erläutert.
Fig. 1 zeigt eine vereinfachte perspektivische Ansicht einer Graviermaschine zum Gravieren von zylindrischen Werkstücken, wie Prägezylindern oder Flexodruckformen;
Fig. 2 zeigt eine schematische Querschnittsansicht der Graviermaschine und eines rotierenden Werkstücks;
Fig. 3a zeigt eine Ansicht entsprechend Fig. 1 während der Bearbeitung des Werkstücks mit einem Laserstrahl, mit einer ersten Drehrichtung des Werkstücks und einer ersten Bewegungsrichtung eines Laser-Bearbeitungsorgans;
Fig. 3b zeigt eine Ansicht entsprechend Fig. 3a während der Bearbeitung des Werkstücks mit dem Laserstrahl, jedoch mit einer entgegengesetzten zweiten Drehrichtung des Werkstücks und einer entgegengesetzten zweiten Bewegungsrichtung des Bearbeitungsorgans;
Fig. 4a zeigt eine Ansicht entsprechend Fig. 3a während der Bearbeitung des Werkstücks mit dem Laserstrahl, mit einer ersten Drehrichtung des Werkstücks und einer ersten Bewegungsrichtung des Bearbeitungsorgans;
Fig. 4b zeigt eine Ansicht entsprechend Fig. 4a während der Bearbeitung des Werkstücks mit dem Laserstrahl, mit der ersten Drehrichtung des Werkstücks, jedoch mit einer entgegengesetzten zweiten Bewegungsrichtung des Bearbeitungsorgans;
Fig. 4c zeigt eine Ansicht entsprechend Fig. 4a und 4b während der Bearbeitung des Werkstücks mit dem Laserstrahl, mit der ersten Bewegungsrichtung des Bearbeitungsorgans, jedoch mit einer entgegengesetzten zweiten Drehrichtung des Werkstücks;
Fig. 4d zeigt eine Ansicht entsprechend Fig. 4a, 4b und 4c während der Bearbeitung des Werkstücks mit dem Laserstrahl, jedoch mit der zweiten Drehrichtung des Werkstücks und der zweiten Bewegungsrichtung des Laser-Bearbeitungsorgans;
Fig. 5a zeigt eine vergrößerte perspektivische Ansicht eines Teils der Oberfläche des Werkstücks während der Bearbeitung mit dem Laserstrahl, während einer Drehung des Werkstücks mit der ersten Drehrichtung und einer Bewegung des Bearbeitungsorgans mit der ersten Bewegungsrichtung, wie in Fig. 3a;
Fig. 5b zeigt eine vergrößerte perspektivische Ansicht entsprechend Fig. 5a während der Bearbeitung mit dem

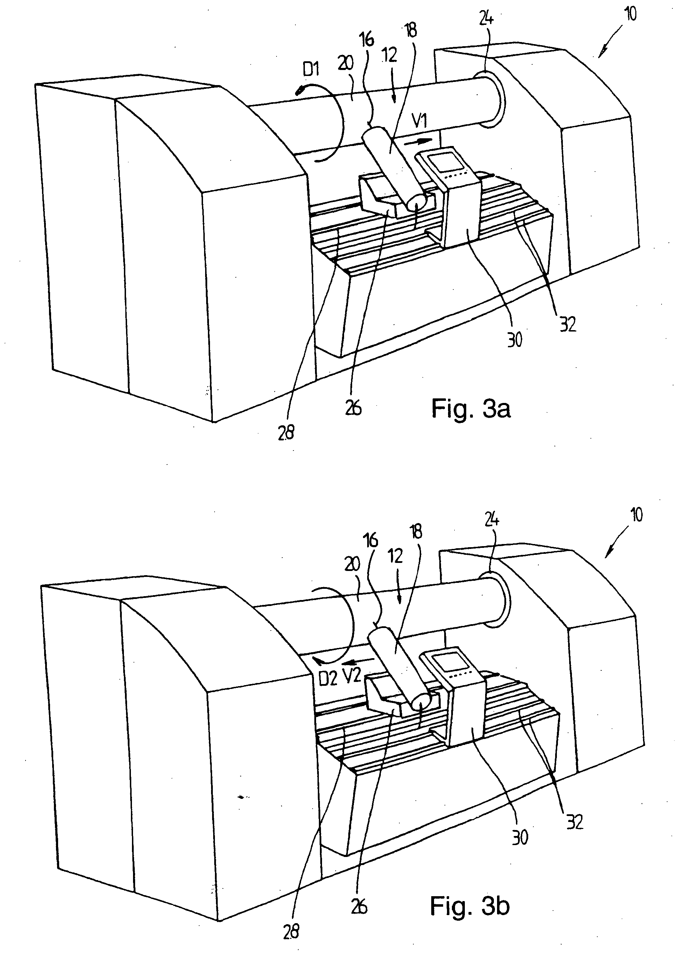

Laserstrahl, jedoch während einer Drehung des Werkstücks mit der zweiten Drehrichtung und während einer Bewegung des Bearbeitungsorgans mit der zweiten Bewegungsrichtung, wie in Fig. 3b.

Die in der Zeichnung schematisch dargestellte Graviermaschine 10 ist zur Laserdirektgravur von zylindrischen Werkstücken 12 bestimmt, die entweder als Flexodruckform zum Bedrucken von Wellpappe oder als Prägeform zum Prägen von Leder, Kunststoffen oder anderen Materialien verwendet werden sollen.

Die Gravur jedes Werkstücks 12 erfolgt mit Hilfe eines Laserstrahls 16, der von einem Laserbearbeitungsorgan 18 aus auf eine zylindrische äußere Oberfläche 20 des in die Graviermaschine 10 eingespannten Werkstücks 12 gerichtet wird, während dieses von einem Drehantrieb (nicht dargestellt) mit relativ hoher Drehgeschwindigkeit um seine Längsmittelachse 14 gedreht wird. Der Drehantrieb umfasst entweder einen Elektromotor mit umkehrbarer Drehrichtung oder ein Getriebe, mit dem sich die Drehrichtung des Werkstücks 12 umkehren lässt.

Die Graviermaschine 10 umfasst neben dem Drehantrieb zwei Halterungen 24 zum Einspannen des Werkstücks 12, einen Gravierwagen 26, der von einem Gravierwagenantrieb (nicht dargestellt) mittels einer Spindel 28 in axialer Richtung des zylindrischen Werkstücks 12 an diesem entlang bewegt werden kann. Der Gravierwagenantrieb umfasst einen elektrischen Schrittmotor, dessen Drehrichtung umkehrbar ist. Der Gravierwagen 26 trägt das Laserbearbeitungsorgan 18 und ein Steuerpult 30, das ebenfalls auf Führungen 32 in axialer Richtung entlang des Werkstücks 12 beweglich ist.

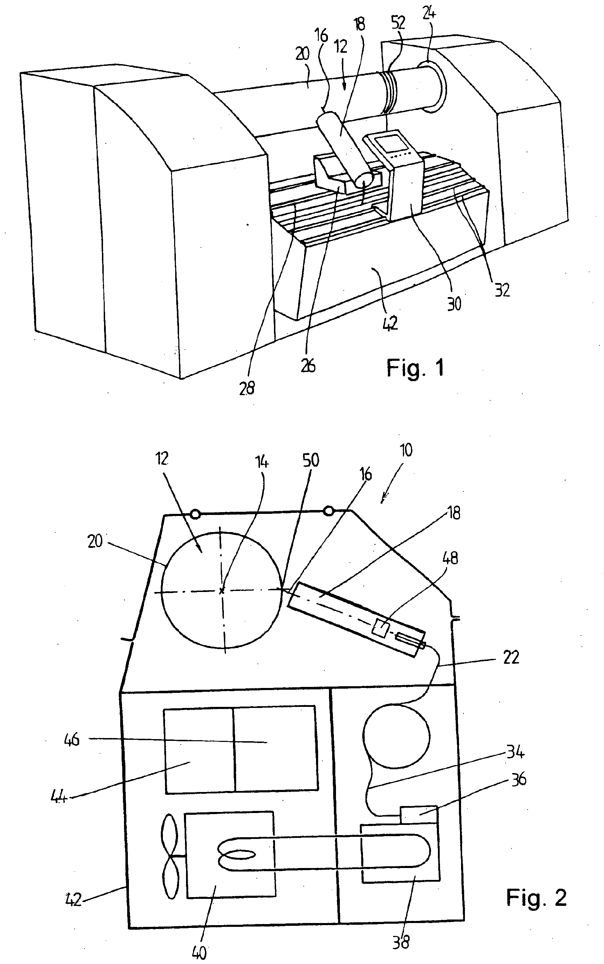

Wie in Fig. 2 dargestellt, ist das Laserbearbeitungsorgan 18 durch eine optische Faser 22 mit einem Fiberlaser 34 verbunden, der sich zusammen mit seiner Pumpquelle 36 und einem Kühlkörper 38 zum Kühlen der Pumpquelle 36 in einem stationären Unterteil 42 der Graviermaschine 10 befindet. Das Unterteil 40 enthält weiter ein Kühlsystems 40 zum Kühlen des Kühlkörpers 38, eine Maschinensteuereinheit 44 zur Steuerung des Drehantriebs und des Gravierwagenantriebs sowie eine Lasersteuereinheit 46. Der von dem Fiberlaser 34 erzeugte ununterbrochene Laserstrahl wird durch die optische Faser 32 in das gasdicht verschlossene röhrenförmige Laserbearbeitungsorgan 18 eingespeist.

Das Laserbearbeitungsorgan 18 umfasst unter anderem einen von der Lasersteuereinheit 46 gesteuerten akustooptischen Modulator 48 sowie Optikelemente (nicht dargestellt), mit denen sich der aus dem Modulator 48 austretende modulierte Laserstrahl 16 auf einen Auftreffpunkt 50 oder Bearbeitungsfleck auf der Oberfläche 20 des Werkstücks 12 fokussieren lässt.

Neben den genannten Komponenten umfasst die Graviermaschine 10 auch noch einen Gravurdatenspeicher (nicht dargestellt), in dem die Gravurdaten gespeichert sind, die der Gravur des Werkstücks 12 zugrunde gelegt und zur Ansteuerung des akustooptischen Modulators 48 aus dem Gravurdatenspeicher ausgelesen und der Lasersteuereinheit 46 zugeführt werden.

Zur Gravur der Oberfläche 20 wird das Werkstück 12 mittels des Drehantriebs mit hoher Geschwindigkeit gedreht, während der Gravierwagen 26 mit dem Laserbearbeitungsorgan 18 in axialer Richtung am Werkstück 12 entlang bewegt wird. Dadurch bewegt sich der Auftreffpunkt 50 des Laserstrahls 16 während der Gravur entlang einer wendel- oder schraubenförmigen Spur 52 (Fig. 1) über die zylindrische Oberfläche 20 des Werkstücks 12.

Während der Gravur werden die Gravurdaten zeilenweise aus dem Gravurdatenspeicher ausgelesen, wobei die Gravurdaten in jeder Zeile genau einer Umdrehung des Werkstücks 12 entsprechen, so dass bei jeder Umdrehung des Werkstücks 12 eine Gravurzeile aus dem Gravurdatenspeicher ausgelesen wird. Die Reihenfolge, in der die Gravurdaten einer Gravurzeile ausgelesen werden, entspricht der Reihenfolge der Auftreffpunkte des Laserstrahls 16 entlang der Spur 52 während einer Umdrehung des Werkstücks 12.

Wenn Bereiche der Oberfläche des Werkstücks 12 mit dem Laserstrahl 16 bis zu einer verhältnismäßig großen Tiefe abgetragen werden sollen, die größer ist als die Eindringtiefe des Laserstrahls 16 in das Material des Werkstücks 12, wird die Gravur schichtweise in mehreren Gravierdurchgängen vorgenommen. Bei jedem Gravierdurchgang wird der Gravierwagen 26 über die gesamte axiale Länge des Werkstücks 12 an diesem entlang bewegt, wobei sich der Laserstrahl 16 in den zu gravierenden Bereichen der Oberfläche 20, das heißt in den Bereichen, wo Material abgetragen werden soll, entlang der Spur 52 über die Oberfläche 20 des Werkstücks 12 bewegt, während er in den übrigen Bereichen, wo kein Material abgetragen werden soll, mittels des akustooptischen Modulators 48 von der Oberfläche 20 des Werkstücks 12 weg abgelenkt wird. Bei jedem Gravierdurchgang wird in den zu gravierenden Bereichen eine Schicht des Werkstücks 12 spurweise abgetragen.

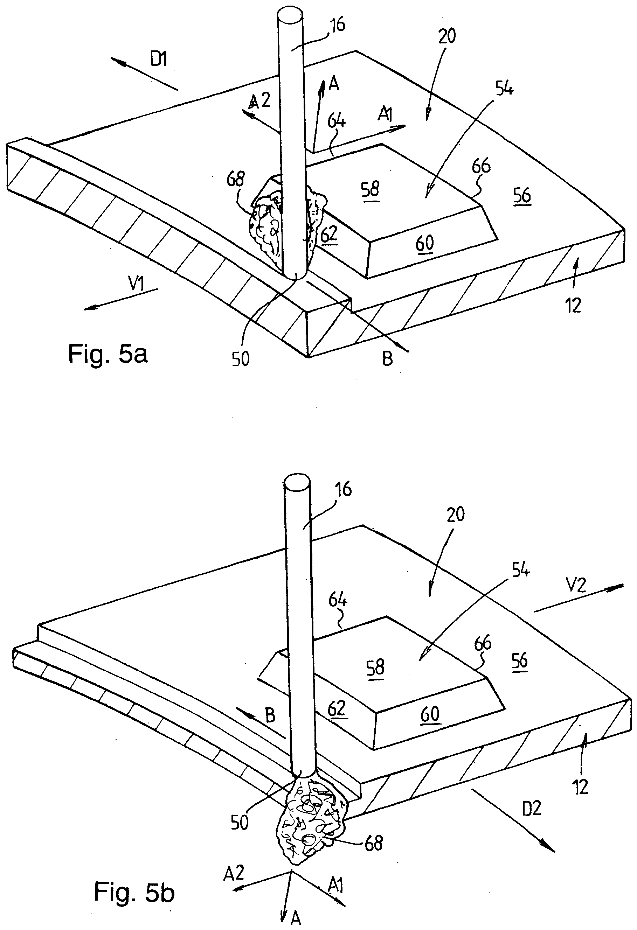

Ein derartiger Abtrag des Werkstücks 12 in mehreren Schichten ist in den Figuren 5a und 5b dargestellt, die einen Ausschnitt der Oberfläche 20 des Werkstücks 12 während der Gravur mit dem Laserstrahl 16 zeigen, in dem das Werkstück 12 bereits teilweise abgetragen worden ist.

Der in den Figuren 5a und 5b dargestellte Ausschnitt der Oberfläche 20 des Werkstücks 12 umfasst beispielhaft eine quadratische Erhebung 54, die bei der Gravur stehen bleibt und in radialer Richtung des Werkstücks 12 über eine abgetragene umgebende Oberfläche 56 übersteht. Die Erhebung 52 besitzt eine Oberseite 58, die mit der zylindrischen Oberfläche 20 des unbearbeiteten Werkstücks 12 fluchtet, sowie vier steile, paarweise entgegengesetzte Flanken 60, 62, 64, 66 von denen die beiden Flanken 60, 64 in eine Umfangsrichtung des Werkstücks 12 und die beiden Flanken 62, 66 in eine axiale Richtung des Werkstücks 12 weisen.

Wenn das Werkstück 12 ein Gummiklischee ist, das nach der Bearbeitung als Druckzylinder für den Flexodruck verwendet werden soll, bildet die Oberseite 58 der Erhebung 54 einen erhabenen druckenden Oberflächenbereich der Flexodruckform während die umgebende Oberfläche 56 einen vertieften nicht-druckenden Bereich bildet.

Wenn das Werkstück 12 nach der Bearbeitung als Prägezylinder verwendet werden soll, bildet die Erhebung 54 eine Patrize, die eine Vertiefung in das zu prägende Material einformt.

Bei der Gravur des Werkstücks 12 wird dieses am jeweiligen Auftreffpunkt 50 des Laserstrahls 16 stark erhitzt, wobei über die Eindringtiefe des Laserstrahls 16 ein Teil des Materials des Werkstücks 12 verdampft. Ein anderer Teil des Materials schmilzt, sofern es sich bei dem Werkstück 12 um einen metallischen Prägezylinderrohling handelt, oder verbrennt, sofern es sich bei dem Werkstück 12 um ein Gummiklischee für einen Flexodruckzylinder handelt. Da es infolge der hohen Temperaturen und der Verdampfung von Material am Auftreffpunkt 50 des Laserstrahls 16 zu einer starken Volumenzunahme kommt, wird das nicht-verdampfte Material in Form von Schmelzauswurf oder Schmauch als Partikelstrom 68 von dem expandierenden Gas vom Auftreffpunkt 50 weg mitgerissen, wie in den Figuren 5a und 5b schematisch dargestellt.

Der mitgerissene Schmelzauswurf oder Schmauch schlägt sich trotz einer Absaugung (nicht dargestellt) mindestens teilweise auf der bereits gravierten oder noch ungravierten Oberfläche 20 des Werkstücks 12 nieder. Beim spurweisen Abtrag von größeren Oberflächenbereichen verteilt sich der Niederschlag des Schmelzauswurfs oder Schmauchs allerdings nicht gleichförmig um den Auftreffpunkt 50 des Laserstrahls 16 herum, sondern schlägt sich bevorzugt auf einer Seite des Auftreffpunkts 50 nieder, weil sich das expandierende Gas mit der Partikelstrom 68 bevorzugt in einer Richtung A vom Auftreffpunkt 48 weg bewegt, wie in den Figuren 5a und 5b schematisch dargestellt.

Die Richtung A setzt sich aus einer zwei Richtungskomponenten zusammen, nämlich einer ersten Richtungskomponente A1, die zu der Bewegungsrichtung B des Laserstrahls 16 entlang der Spur 52 entgegengesetzt ist, und einer zweiten Richtungskomponente A2, die zu der axialen Richtung V entgegengesetzt ist, in welcher der Abtrag der Spuren 52 während der Gravur erfolgt. Die Ursache für die ungleichförmige Verteilung des Schmelzauswurfs oder Schmauchs liegt darin, dass am Auftreffpunkt 50 des Laserstrahls 16 ein nur teilweise von Wänden umgebener Krater gebildet wird. Aus diesem Krater wird das expandierende Gas mit der Partikelstrom 68 bevorzugt in der Richtung A ausgeworfen, in welcher der Krater nicht von Wänden umgeben ist, so dass dort dem expandierenden Gas und dem Partikelstrom 68 ein geringerer Strömungswiderstand entgegengesetzt wird als in allen anderen Richtungen.

Wenn während der Gravur, d.h. im Zuge des Materialabtrags, das Werkstück 12 in bekannter Weise stets mit derselben Drehrichtung D gedreht und der Gravierwagen 26 stets mit derselben Vorschub- oder Bewegungsrichtung V am Werkstück 12 entlang bewegt wird, bleibt auch die Richtung A des Partikelstroms 68 während der gesamten Bearbeitung oder Gravur stets dieselbe. Wenn sich der Laserstrahl 16 nahe an einer Erhebung vorbei bewegt, wie der Erhebung 54, hat dies zur Folge, dass der Partikelstrom 68 stets auf diejenigen Flanken 60 und 62 der Erhebung 54 auftrifft, die sich vom Auftreffpunkt 50 des Laserstrahls 16 aus gesehen in der Richtung A befinden. Dabei handelt es sich um die zur Drehrichtung D des Werkstücks 12 entgegengesetzte Flanke 60 und die in Vorschub- oder Bewegungsrichtung V des Gravierwagens 26 weisende Flanke 62, wie in Fig. 5a dargestellt. Daher schlägt sich nur an diesen Flanken 60, 62 Schmelzauswurf oder Schmauch nieder, während sich an den anderen Flanken 64, 66 kein Schmelzauswurf oder Schmauch niederschlägt. Infolge des einseitigen Niederschlags wird zum einen dessen Schichtdicke an den Flanken 60, 62 relativ groß, wodurch die Flankenneigung abnimmt und das Präge- oder Druckergebnis ungünstig beeinflusst werden kann. Zum anderen erschwert eine große Schichtdicke des Niederschlags dessen Beseitigung bei einer auf die Gravur folgenden Reinigung des Werkstücks 12.

Um diese Probleme zu vermeiden, werden bei der in Fig. 3a und 3b dargestellten Graviermaschine 10 nach jedem Gravierdurchgang die Drehrichtung des Werkstücks 12 und die Bewegungsrichtung des Gravierwagens 26 umgekehrt, so dass sich das Werkstück 12 bei zwei aufeinander folgenden Gravierdurchgängen abwechselnd mit unterschiedlicher Drehrichtung dreht und der Gravierwagen 26 mit unterschiedlichen Vorschub- oder Bewegungsrichtungen am Werkstück 12 entlang bewegt wird, während mit dem Laserstrahl 16 Material abgetragen wird. Wie in Fig. 3a dargestellt, wird bei einem ersten Gravierdurchgang das Werkstück 12 mit einer ersten Drehrichtung D1 gedreht und der Gravierwagen 26 mit einer ersten Vorschub- oder Bewegungsrichtung V1 am Werkstück 12 entlang bewegt, während bei einem in Fig. 3b dargestellten zweiten Gravierdurchgang das Werkstück 12 mit einer entgegengesetzten zweiten Drehrichtung D2 gedreht und der Gravierwagen 26 mit einer entgegengesetzten zweiten Vorschub- oder Bewegungsrichtung V2 am Werkstück 12 entlang bewegt wird.

Bei der Umkehr der Drehrichtung des Werkstücks 12 und der Bewegungsrichtung des Gravierwagens 26 zwischen dem ersten und dem zweiten Gravierdurchgang wird auch die Lese-Richtung umgekehrt, in der die im Gravurdatenspeicher gespeicherten Gravurdaten ausgelesen werden, und zwar sowohl die Reihenfolge, in der die Gravurdaten jeder Gravurzeile nacheinander ausgelesen werden, als auch die Reihenfolge, in der die Gravurzeilen nacheinander ausgelesen werden.

Die zuvor beschriebene Vorgehensweise bei der Gravur hat zur Folge, dass beim ersten Gravierdurchgang der Partikelstrom 68 auf die beiden Flanken 60 und 62 der Erhebung 54 auftrifft, wenn sich der Laserstrahl 16 nahe an der Flanke 62 vorbei bewegt, wie in Fig. 5a dargestellt, oder sich etwas später in der Richtung B von der Flanke 60 weg bewegt, während er beim zweiten Gravierdurchgang auf die beiden anderen Flanken 64, 66 der Erhebung 54 auftrifft, wenn sich der Laserstrahl in Fig. 5b etwas später in der Richtung B von der Flanke 64 weg bzw. noch etwas später nahe an der Flanke 66 vorbei bewegt.

Dadurch wird der Schmelzauswurf oder Schmauch gleichmäßiger auf sämtliche Flanken 60, 62, 64, 66 der Erhebung 54 sowie anderer Erhebungen verteilt, wodurch die gravierte Oberfläche 20 mit größerer Genauigkeit die gewünschte Form besitzt. Außerdem kann der Niederschlag nach der Gravur leichter abgereinigt werden, zum Beispiel indem die Oberfläche 20 des Werkstücks 12 lediglich mit Druckluft abgeblasen wird. Darüber hinaus kann die Bearbeitungszeit verkürzt werden, weil der Gravierwagen 26 vor dem zweiten Gravierdurchgang nicht in die Ausgangsposition zurück bewegt werden bracht, sondern nur seine Vorschub- oder Bewegungsrichtung V umgekehrt wird.

Solange beim ersten Gravierdurchgang das Werkstück 12 mit der ersten Drehrichtung D1 gedreht und der Gravierwagen 26 mit der ersten Vorschub- oder Bewegungsrichtung V1 am Werkstück 12 entlang bewegt wird und solange beim zweiten Gravierdurchgang das Werkstück 12 mit der zweiten Drehrichtung D2 gedreht und der Gravierwagen 26 mit der zweiten Vorschub- oder Bewegungsrichtung V2 am Werkstück 12 entlang bewegt wird, wird sowohl die Drehgeschwindigkeit des Werkstücks 12 als auch die Vorschub- oder Bewegungsgeschwindigkeit des Gravierwagens 26 konstant gehalten, so dass sich der Bearbeitungsfleck 50 bei beiden Gravierdurchgängen entlang von gleichläufigen wendel- oder schraubenförmigen Spuren 52 mit derselben Steigung über die Oberfläche des Werkstücks 12 bewegt.

Vor dem Abtrag einer weiteren Schicht wird der Brennpunkt der Optikelemente des Bearbeitungsorgans 18 so eingestellt, dass der Fokus auf der Oberfläche der als Nächstes abzutragenden Schicht liegt.

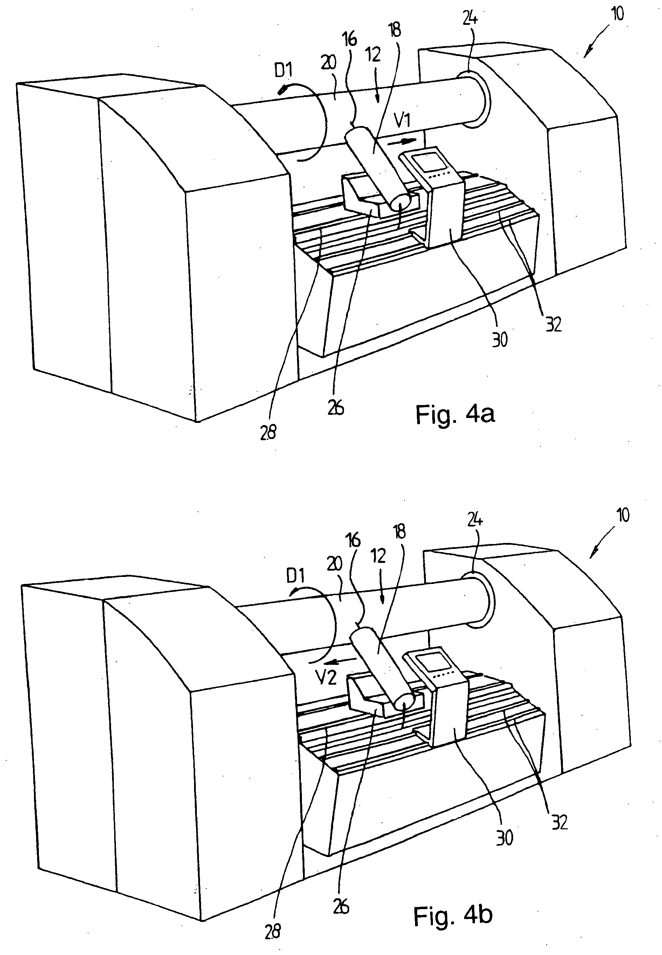

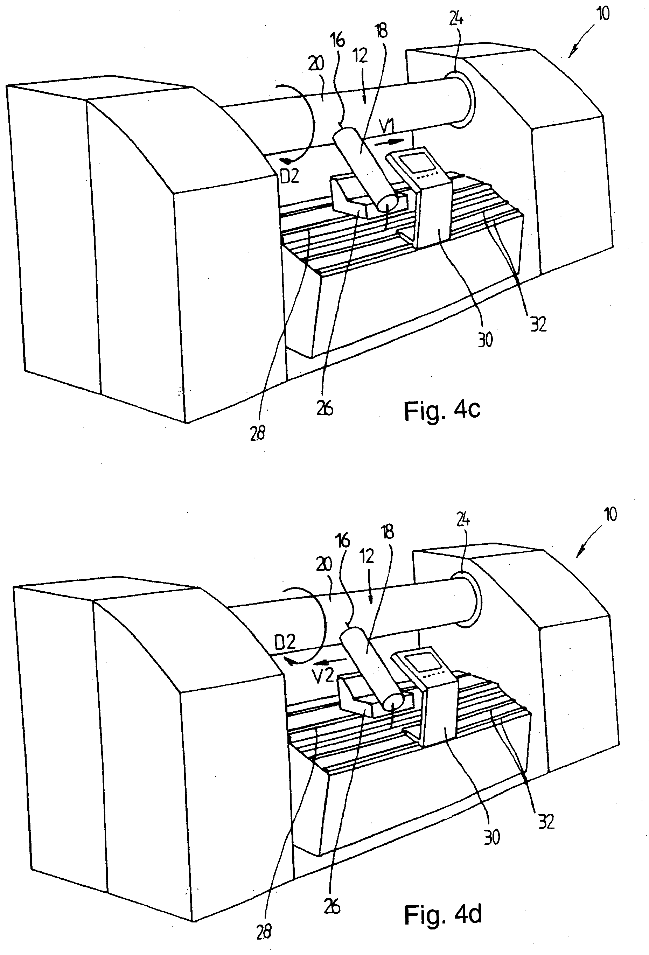

Bei der Graviermaschine 10 den in Figuren 4a bis 4d wird die Drehrichtung D des Werkstücks 12 nur bei jedem zweiten Gravierdurchgang umgekehrt, während die Vorschub- oder Bewegungsrichtung V des Gravierwagens 26 bei jedem Gravierdurchgang umgekehrt wird. Mit anderen Worten wird bei dem in Fig. 4a dargestellten ersten Gravierdurchgang das Werkstück 12 mit der ersten Drehrichtung D1 gedreht und der Gravierwagen 26 mit der ersten Vorschub- oder Bewegungsrichtung V1 am Werkstück 12 entlang bewegt. Beim nachfolgenden zweiten Gravierdurchgang in Fig. 4b wird das Werkstück 12 ebenfalls mit der ersten Drehrichtung D1 gedreht, während der Gravierwagen 26 mit umgekehrter Vorschub- oder Bewegungsrichtung V2 am Werkstück 12 entlang bewegt wird. Beim dritten Gravierdurchgang in Fig. 4c wird das Werkstück 12 mit umgekehrter Drehrichtung D2 gedreht, während der Gravierwagen 26 mit der Vorschub- oder Bewegungsrichtung V1 am Werkstück 12 entlang bewegt wird. Beim vierten Gravierdurchgang in Fig. 4d bleibt die Drehrichtung D2 des Werkstücks 12 unverändert, während die Vorschub- oder Bewegungsrichtung des Gravierwagens 26 umgekehrt wird, um diesen mit der Vorschub- oder Bewegungsrichtung V2 am Werkstück 12 entlang zu bewegen.

Auch hier wird das Werkstück 12 bei allen Gravierdurchgängen mit konstanter Drehgeschwindigkeit gedreht und der Gravierwagen 26 mit konstanter Vorschub- oder Bewegungsgeschwindigkeit am Werkstück 12 entlang bewegt. Jedoch bewegt sich in diesem Fall beim ersten und dritten Gravierdurchgang der Bearbeitungsfleck 50 entlang einer rechtsläufigen wendel- oder schraubenförmigen Spur 52 über die Oberfläche des Werkstücks 12, während sich der Bearbeitungsfleck 50 beim zweiten und vierten Gravierdurchgang entlang einer linksläufigen wendel- oder schraubenförmigen Spur 52 über die Oberfläche des Werkstücks 12 bewegt. Die Steigung der Spur 52 ist bei allen Gravierdurchgängen dieselbe.

Bei jeder Umkehr der Bewegungsrichtung des Gravierwagens 26 zwischen zwei aufeinander folgenden Gravierdurchgängen wird die Lese-Richtung umgekehrt, in der die im Gravurdatenspeicher gespeicherten Gravurzeilen nacheinander ausgelesen werden. Dort, wo zwischen zwei aufeinander folgenden Gravierdurchgängen nicht nur die Bewegungsrichtung des Gravierwagens 26 sondern auch die Drehrichtung des Werkstücks 12 umgekehrt wird, wird neben der Reihenfolge, in der die Gravurzeilen nacheinander ausgelesen werden, auch die Reihenfolge umgekehrt, in der die Gravurdaten jeder Gravurzeile nacheinander ausgelesen werden.

## Patentansprüche

1. Verfahren zur Laserdirektgravur einer Druck- oder Prägeform (12) durch Materialabtrag mit mindestens einem Laserstrahl (16), wobei die Druck- oder Prägeform (12) mit einer ersten Drehrichtung (D1) um eine Drehachse (14) gedreht und ein den Laserstrahl emittierendes Bearbeitungsorgan (18) mit einer ersten Bewegungsrichtung (V1) parallel zur Drehachse (14) der Druck- oder Prägeform (12) bewegt wird, während zugleich mit dem Laserstrahl (16) Material von der Druck- oder Prägeform (12) abgetragen wird, und wobei während eines Teils der Bearbeitung die Druck- oder Prägeform (12) mit einer zur ersten Drehrichtung (D1) entgegengesetzten zweiten Drehrichtung (D2) gedreht und/oder das Bearbeitungsorgan (18) mit einer zur ersten Bewegungsrichtung (V1) entgegengesetzten zweiten Bewegungsrichtung (V2) an der Druck- oder Prägeform (12) entlang bewegt wird, während zugleich mit dem Laserstrahl (16) Material von der Druck- oder Prägeform (12) abgetragen wird, **dadurch gekennzeichnet, dass** die Druck- oder Prägeform (12) zylindrisch geformt ist, dass bei der Bearbeitung mit dem Laserstrahl (16) die zylindrische Druck- oder Prägeform (12) sowohl in der ersten und in der zweiten Drehrichtung (D1, D2) mit einer konstanten Drehgeschwindigkeit gedreht wird und dass das Bearbeitungsorgan (18) sowohl in der ersten und in der zweiten Bewegungsrichtung (V1, V2) mit einer konstanten Bewegungsgeschwindigkeit an der Druck- oder Prägeform (12) entlang bewegt wird, so dass sich ungeachtet der Drehrichtung der Druck- oder Prägeform (12) und der Bewegungsrichtung des Bearbeitungsorgans (18) ein Auftreffpunkt (50) des Laserstrahls (16) stets entlang von schraubenförmigen Spuren (52) über die Oberfläche der Druck- oder Prägeform (12) bewegt.

2. Verfahren nach Anspruch 1, **dadurch gekennzeichnet, dass** die Druck- oder Prägeform (12) abwechselnd mit unterschiedlichen Drehrichtungen (D1, D2) um die Drehachse (14) gedreht und/oder das Bearbeitungsorgan (18) abwechselnd mit unterschiedlichen Bewegungsrichtungen (V1, V2) parallel zur Drehachse (14) an der Druck- oder Prägeform (12) entlang bewegt wird, während zugleich mit dem Laserstrahl (16) Material von der Druck- oder Prägeform (12) abgetragen wird.

3. Verfahren nach Anspruch 1 oder 2, **dadurch gekennzeichnet, dass** das Material der Druck- oder Prägeform (12) schichtweise abgetragen wird, wobei ein Teil der Schichten während einer Drehung der Druck- oder Prägeform (12) mit der ersten Drehrichtung (D1) und ein Teil der Schichten während einer Drehung der Druck- oder Prägeform (12) mit der zweiten Drehrichtung (D2) abgetragen wird.

4. Verfahren nach einem der vorangehenden Ansprüche, **dadurch gekennzeichnet, dass** das Material der Druck- oder Prägeform (12) schichtweise abgetragen wird, wobei ein Teil der Schichten während einer Bewegung des Bearbeitungsorgans (18) mit der ersten Bewegungsrichtung (V1) und ein Teil der Schichten während einer Bewegung des Bearbeitungsorgans (18) mit der zweiten Bewegungsrichtung (V2) abgetragen wird.

5. Verfahren nach Anspruch 4, **dadurch gekennzeichnet, dass** benachbarte Schichten mit dem Laserstrahl (16) abgetragen werden, während die Druck- oder Prägeform (12) abwechselnd mit der ersten und mit der zweiten Drehrichtung (D1, D2) gedreht und/oder das Bearbeitungsorgan (18) abwechselnd mit der ersten und mit der zweiten Bewegungsrichtung (V1, V2) an der Druck- oder Prägeform (12) entlang bewegt wird.

6. Verfahren nach einem der vorangehenden Ansprüche, **dadurch gekennzeichnet, dass** die Druck- oder Prägeform (12) mit dem Laserstrahl (16) in mehreren Gravierdurchgängen bearbeitet wird und dass vor jedem Gravierdurchgang die Bewegungsrichtung (V) des Bearbeitungsorgans (18) entlang der Druck- oder Prägeform (12) umgekehrt wird.

7. Verfahren nach einem der vorangehenden Ansprüche, **dadurch gekennzeichnet, dass** die Druck- oder Prägeform (12) mit dem Laserstrahl (16) in mehreren Gravierdurchgängen bearbeitet wird und dass vor einem Teil der Gravierdurchgänge die Drehrichtung (D) der Druck- oder Prägeform (12) umgekehrt wird.

8. Verfahren nach einem der vorangehenden Ansprüche, **dadurch gekennzeichnet, dass** bei dem Materialabtrag mit dem Laserstrahl (16) erzeugter Schmelzauswurf oder Schmauch gleichmäßig an sämtlichen Flanken (60, 62, 64, 66) von Erhebungen (54) der Druck- oder Prägeform (12), die nach dem Materialabtrag zurückbleiben, abgelagert wird.

9. Verfahren nach einem der vorangehenden Ansprüche, **dadurch gekennzeichnet, dass** die Druck- oder Prägeform (12) eine zylindrische Prägeform oder eine zylindrische Druckform für den Flexodruck ist.

10. Verfahren nach einem der vorangehenden Ansprüche, **dadurch gekennzeichnet, dass** bei einer Änderung von sowohl der Drehrichtung der Druck- oder Prägeform (12) und der Bewegungsrichtung des Bearbeitungsorgans (18) die Lese-Richtung umgekehrt wird, in der in einem Gravurdatenspeicher gespeicherte Gravurdaten ausgelesen werden.

11. Verfahren nach einem der vorangehenden Ansprüche, **dadurch gekennzeichnet, dass** bei einer Änderung der Bewegungsrichtung des Bearbeitungsorgans (18) ohne eine Änderung der Drehrichtung der Druck- oder Prägeform (12) die Lese-Richtung umgekehrt wird, in der in einem Gravurdatenspeicher gespeicherte Gravurzeilen ausgelesen werden.

12. Vorrichtung zur Laserdirektgravur einer Druck- oder Prägeform (12) durch Materialabtrag mit mindestens einem Laserstrahl (16), umfassend einen Laser (34) zur Erzeugung des Laserstrahls (16), ein mit dem Laser (34) verbundenes Bearbeitungsorgan (18), das den vom Laser (34) erzeugten Laserstrahl (16) auf die Druck- oder Prägeform (12) lenkt, Einrichtungen zum Drehen der Druck- oder Prägeform (12) mit einer ersten Drehrichtung (D1) um eine Drehachse (14) während der Beaufschlagung der Druck- oder Prägeform (12) mit dem Laserstrahl (16), Einrichtungen zum Bewegen des Bearbeitungsorgans (18) mit einer ersten Bewegungsrichtung (V1) parallel zur Drehachse (14) der Druck- oder Prägeform (12) während der Beaufschlagung der Druck- oder Prägeform (12) mit dem Laserstrahl (16), sowie mit Einrichtungen zum Drehen der Druck- oder Prägeform (12) mit einer zur ersten Drehrichtung (D1) entgegengesetzten zweiten Drehrichtung (D2) während der Beaufschlagung der Druck- oder Prägeform (12) mit dem Laserstrahl (16) und/oder Einrichtungen (26, 28) zum Bewegen des Bearbeitungsorgans (18) mit einer zur ersten Bewegungsrichtung (V1) entgegengesetzten zweiten Bewegungsrichtung (V2) während der Beaufschlagung der Druck- oder Prägeform (12) mit dem Laserstrahl (16), **dadurch gekennzeichnet, dass** die Einrichtungen zum Drehen der zylindrischen Druck- oder Prägeform (12) so vorgesehen sind, dass sie die Druck- oder Prägeform (12) sowohl in der ersten und in der zweiten Drehrichtung (D1, D2) mit einer konstanten Drehgeschwindigkeit drehen und dass die Einrichtungen (26, 28) zum Bewegen des Bearbeitungsorgans (18) so vorgesehen sind, dass sie das Bearbeitungsorgan (18) sowohl in der ersten und in der zweiten Bewegungsrichtung (V1, V2) mit einer konstanten Bewegungsgeschwindigkeit an der Druck- oder Prägeform (12) entlang bewegen, so dass sich ungeachtet der Drehrichtung der Druck- oder Prägeform (12) und der Bewegungsrichtung des Bearbeitungsorgans (18) ein Auftreffpunkt
(50) des Laserstrahls (16) stets entlang von schraubenförmigen Spuren (52) über die Oberfläche der Druck- oder Prägeform (12) bewegt.

13. Vorrichtung nach Anspruch 12, **dadurch gekennzeichnet, dass** die Einrichtungen zum Drehen der Druck- oder Prägeform (12) mit der ersten und zweiten Drehrichtung (D1, D2) einen Drehantrieb mit umkehrbarer Drehrichtung umfassen.

14. Vorrichtung nach Anspruch 12 oder 13, **dadurch gekennzeichnet, dass** die Einrichtungen (26, 28) zum Bewegen des Bearbeitungsorgans (18) mit der ersten und zweiten Bewegungsrichtung (V1, V2) eine Spindel (28) und einen die Spindel (28) mit umkehrbarer Drehrichtung antreibenden Schrittmotor umfassen.

15. Vorrichtung nach einem der Ansprüche 12 bis 14, **gekennzeichnet durch** Einrichtungen zur Veränderung der Lese-Richtung, in der Gravurdaten und/oder Gravurzeilen aus einem Gravurdatenspeicher ausgelesen werden.

## Claims

1. Method for direct laser engraving of a printing or embossing form (12) by material removal with at least one laser beam (16), the printing or embossing form (12) being rotated with a first direction of rotation (D1) about an axis of rotation (14), and a machining unit (18) emitting the laser beam being moved parallel to the axis of rotation (14) of the printing or embossing form (12) with a first direction of movement (V1), while at the same time material is removed from the printing or embossing form (12) by the laser beam (16) and, during part of the machining, the printing or embossing form (12) being rotated with a second direction of rotation (D2), opposite to the first direction of rotation (D1), and/or the machining unit (18) being moved along the printing or embossing form (12) with a second direction of movement (V2), opposite to the first direction of movement (V1), while at the same time material is removed from the printing or embossing form (12) by the laser beam (16),
**characterized in that** the printing or embossing form (12) is shaped cylindrically, **in that**, during the machining with the laser beam (16), the cylindrical printing or embossing form (12) is rotated both in the first and in the second direction of rotation (D1, D2) at a constant rotational speed, and **in that** the machining unit (18) is moved along the printing or embossing form (12) both in the first and in the second direction of movement (V1, V2) at a constant speed of movement, so that, irrespective of the direction of rotation of the printing or embossing form (12) and the direction of movement of the machining unit (18), a point of impingement (50) of the laser beam (16) is always moved over the surface of the printing or embossing form (12) along helical tracks (52).

2. Method according to Claim 1, **characterized in that** the printing or embossing form (12) is rotated about the axis of rotation (14) alternately with different directions of rotation (D1, D2) and/or the machining unit (18) is moved along the printing or embossing form (12), parallel to the axis of rotation (14), alternately with different directions of movement (V1, V2), while at the same time material is removed from the printing or embossing form (12) by the laser beam (16).

3. Method according to Claim 1 or 2, **characterized in that** the material of the printing or embossing form (12) is removed layer by layer, some of the layers being removed during the rotation of the printing or embossing form (12) with the first direction of rotation (D1), and some of the layers being removed during the rotation of the printing or embossing form (12) with the second direction of rotation (D2).

4. Method according to one of the preceding claims, **characterized in that** the material of the printing or embossing form (12) is removed layer by layer, some of the layers being removed during the movement of the machining unit (18) with the first direction of movement (V1), and some of the layers being removed during the movement of the machining unit (18) with the second direction of movement (V2).

5. Method according to Claim 4, **characterized in that** adjacent layers are removed by the laser beam (16) while the printing or embossing form (12) is rotated alternately with the first and with the second direction of rotation (D1, D2) and/or the machining unit (18) is moved along the printing or embossing form (12) alternately with the first and with the second direction of movement (V1, V2).

6. Method according to one of the preceding claims, **characterized in that** the printing or embossing form (12) is machined by the laser beam (16) in a plurality of engraving passes, and **in that** before each engraving pass, the direction of movement (V) of the machining unit (18) along the printing or embossing form (12) is reversed.

7. Method according to one of the preceding claims, **characterized in that** the printing or embossing form (12) is machined by the laser beam (16) in a plurality of engraving passes, and **in that** before some of the engraving passes, the direction of rotation (D) of the printing or embossing form (12) is reversed.

8. Method according to one of the preceding claims, **characterized in that** ejected molten material or smoke generated during the material removal by the laser beam (16) is deposited uniformly on all the flanks (60, 62, 64, 66) of elevations (54) of the printing or embossing form (12) which remain after the material removal.

9. Method according to one of the preceding claims, **characterized in that** the printing or embossing form (12) is a cylindrical embossing form or a cylindrical printing form for flexographic printing.

10. Method according to one of the preceding claims, **characterized in that**, during a change of both the direction of rotation of the printing or embossing form (12) and the direction of movement of the machining unit (18), the reading direction in which engraving data stored in an engraving data memory are read is reversed.

11. Method according to one of the preceding claims, **characterized in that** during a change in the direction of movement of the machining unit (18) without any change in the direction of rotation of the printing or embossing form (12), the reading direction in which engraving lines stored in an engraving data memory are read is reversed.

12. Device for direct laser engraving of a printing or embossing form (12) by material removal with at least one laser beam (16), comprising a laser (34) generating the laser beam (16), a machining unit (18) that is connected to the laser (34) and deflects the laser beam (16) generated by the laser (34) onto the printing or embossing form (12), means for rotating the printing or embossing form (12) with a first direction of rotation (D1) about an axis of rotation (14) during the action of the laser beam (16) on the printing or embossing form (12), means for moving the machining unit (18) with a first direction of movement (V1) parallel to the axis of rotation (14) of the printing or embossing form (12) during the action of the laser beam (16) on the printing or embossing form (12), and comprising means for rotating the printing or embossing form (12) with a second direction of rotation (D2), opposite to the first direction of rotation (D1), during the action of the laser beam (16) on the printing or embossing form (12) and/or means (26, 28) for moving the machining unit (18) with a second direction of movement (V2), opposite to the first direction of movement (V1), during the action of the laser beam (16) on the printing or embossing form (12), **characterized in that** the means for rotating the cylindrical printing or embossing form (12) are provided in such a way that they rotate the printing or embossing form (12) both in the first and in the second direction of rotation (D1, D2) at a constant speed of rotation, and that the means (26, 28) for moving the machining unit (18) are provided in such a way that they move the machining unit (18) along the printing or embossing form (12) both in the first and the second direction of movement (V1, V2) at a constant speed of movement, so that, irrespective of the direction of rotation of the printing or embossing form (12) and the direction of movement of the machining unit (18), a point of impingement (50) of the laser beam (16) always moves over the surface of the printing or embossing form (12) along helical tracks (52).

13. Device according to Claim 12, **characterized in that** the means for rotating the printing or embossing form (12) with the first and second direction of rotation (D1, D2) comprise a rotary drive with reversible direction of rotation.

14. Device according to Claim 12 or 13, **characterized in that** the means (26, 28) for moving the machining unit (18) with the first and second direction of movement (V1, V2) comprise a spindle (28) and a stepping motor driving the spindle (28) with a reversible direction of rotation.

15. Device according to one of Claims 12 to 14, **characterized by** means for changing the reading direction in which engraving data and/or engraving lines are read from an engraving data memory.

## Revendications

1. Procédé de gravure directe au laser d'un moule d'impression ou de gaufrage (12) par élimination de matériau à l'aide d'au moins un faisceau laser (16), dans lequel le moule d'impression ou de gaufrage (12) est mis en rotation dans un premier sens de rotation (D1) autour d'un axe de rotation (14) et un organe de traitement (18) émettant le faisceau laser est déplacé dans un premier sens de déplacement (V1) parallèlement à l'axe de rotation (14) du moule d'impression ou de gaufrage (12) pendant que du matériau est simultanément éliminé du moule d'impression ou de gaufrage (12) à l'aide du faisceau laser (16), et dans lequel, pendant une partie du traitement, le moule d'impression ou de gaufrage (12) est mis en rotation dans un deuxième sens de rotation (D2) opposé au premier sens de rotation (D1) et/ou l'organe de traitement (18) est déplacé dans un deuxième sens de déplacement (V2) opposé au premier sens de déplacement (V1) le long du moule d'impression ou de gaufrage (12), pendant que du matériau est simultanément éliminé du moule d'impression ou de gaufrage (12) à l'aide du faisceau laser (16),
**caractérisé en ce que** le moule d'impression ou de gaufrage (12) est façonné sous une forme cylindrique, lors du traitement à l'aide du faisceau laser (16), le moule d'impression ou de gaufrage (12) cylindrique est mis en rotation dans le premier sens et dans le deuxième sens de rotation (D1, D2) à une vitesse de rotation constante et **en ce que** l'organe de traitement (18) est déplacé dans le premier sens et dans le deuxième sens de déplacement (V1, V2) à une vitesse de déplacement constante le long du moule d'impression ou de gaufrage (12), de manière à ce que, malgré le sens de rotation du moule d'impression ou de gaufrage (12) et le sens de déplacement de l'organe de traitement (18), un point d'incidence (50) du faisceau laser (16) se déplace toujours le long de traces hélicoïdales (52) sur la surface du moule d'impression ou de gaufrage (12).

2. Procédé selon la revendication 1, **caractérisé en ce que** le moule d'impression ou de gaufrage (12) est mis en rotation de manière alternée dans des sens de rotation (D1, D2) différents autour de l'axe de rotation (14) et/ou **en ce que** l'organe de traitement (18) est déplacé de manière alternée dans des sens de déplacement (V1, V2) différents parallèles à l'axe de rotation (14) le long du moule d'impression ou de gaufrage (12), pendant que du matériau est simultanément éliminé du moule d'impression ou de gaufrage (12) à l'aide du faisceau laser (16).

3. Procédé selon la revendication 1 ou 2, **caractérisé en ce que** le matériau du moule d'impression ou de gaufrage (12) est éliminé couche par couche, dans lequel une partie des couches est éliminée pendant une rotation du moule d'impression ou de gaufrage (12) dans un premier sens de rotation (D1) et une partie des couches est éliminée pendant une rotation du moule d'impression ou de gaufrage (12) dans le deuxième sens de rotation (D2).

4. Procédé selon l'une des revendications précédentes, **caractérisé en ce que** le matériau du moule d'impression ou de gaufrage (12) est éliminé couche par couche, dans lequel une partie des couches est éliminée pendant un déplacement de l'organe de traitement (18) dans le premier sens de déplacement (V1) et une partie des couches est éliminée pendant un déplacement de l'organe de traitement (18) dans le deuxième sens de déplacement (V2).

5. Procédé selon la revendication 4, **caractérisé en ce que** des couches contiguës sont éliminées à l'aide du faisceau laser (16) pendant que le moule d'impression ou de gaufrage (12) est mis en rotation de manière alternée dans les premier et deuxième sens de rotation (D1, D2) et/ou que l'organe de traitement (18) est déplacé dans les premier et deuxième sens de déplacement (V1, V2) le long du moule d'impression ou de gaufrage (12).

6. Procédé selon l'une des revendications précédentes, **caractérisé en ce que** le moule d'impression ou de gaufrage (12) est traité à l'aide du faisceau laser (16) en plusieurs passes de gravure et **en ce qu'**avant chaque passe de gravure, le sens de déplacement (V) de l'organe de traitement (18) le long du moule d'impression ou de gaufrage (12) est inversé.

7. Procédé selon l'une des revendications précédentes, **caractérisé en ce que** le moule d'impression ou de gaufrage (12) est traité à l'aide du faisceau laser (16) en plusieurs passes de gravure et **en ce qu'**avant une partie des passes de gravure, le sens de rotation (D) du moule d'impression ou de gaufrage (12) est inversé.

8. Procédé selon l'une des revendications précédentes, **caractérisé en ce que** des rejets de masse fondue ou des fumées se produisant lors de l'élimination de matériau à l'aide du faisceau laser (16) et subsistant après l'élimination du matériau, se déposent régulièrement sur la totalité des flancs (60, 62, 64, 66) de protubérances (54) du moule d'impression ou de gaufrage (12).

9. Procédé selon l'une des revendications précédentes, **caractérisé en ce que** le moule d'impression ou de gaufrage (12) est un moule de gaufrage cylindrique ou un moule d'impression cylindrique destiné à la flexographie.

10. Procédé selon l'une des revendications précédentes, **caractérisé en ce que** le sens de lecture dans lequel des données de gravure stockées dans une mémoire de données de gravure sont lues, est inversé lors d'une modification du sens de rotation du moule d'impression ou de gaufrage (12) et du sens de déplacement de l'organe de traitement (18).

11. Procédé selon l'une des revendications précédentes, **caractérisé en ce que** le sens de lecture dans lequel des lignes de gravure stockées dans une mémoire de données de gravure sont lues, est inversé lors d'une modification du sens de déplacement de l'organe de traitement (18) sans modification du sens de rotation du moule d'impression ou de gaufrage (12).

12. Dispositif de gravure directe au laser d'un moule d'impression ou de gaufrage (12) par élimination de matériau à l'aide d'au moins un faisceau laser (16), comprenant un laser (34) destiné à produire le faisceau laser (16), un organe de traitement (18) relié au laser (34), qui dévie le faisceau laser (16) produit par le laser (34) vers le moule d'impression ou de gaufrage (12), des dispositifs destinés à mettre en rotation le moule d'impression ou de gaufrage (12) dans un premier sens de rotation (D1) autour d'un axe de rotation (14) pendant que le moule d'impression ou de gaufrage (12) est exposé au faisceau laser (16), des dispositifs destinés à déplacer l'organe de traitement (18) dans un premier sens de déplacement (V1) parallèlement à l'axe de rotation (14) du moule d'impression ou de gaufrage (12) pendant que le moule d'impression ou de gaufrage (12) est exposé au faisceau laser (16), et des dispositifs destinés à mettre en rotation le moule d'impression ou de gaufrage (12) dans un deuxième sens de rotation (D2) opposé au premier sens de rotation (D1) pendant que le moule d'impression ou de gaufrage (12) est exposé au faisceau laser (16) et/ou des dispositifs (26, 28) destinés à déplacer l'organe de traitement (18) dans un deuxième sens de déplacement (V2) opposé au premier sens de déplacement (V1) pendant que le moule d'impression ou de gaufrage (12) est exposé au faisceau laser (16), **caractérisé en ce que** les dispositifs destinés à mettre en rotation le moule d'impression ou de gaufrage (12) cylindrique pour mettre en rotation le moule d'impression ou de gaufrage (12) tant dans le premier sens et dans le deuxième sens de rotation (D1, D2) à des vitesses de rotation constantes et **en ce que** les dispositifs (26, 28) destinés à déplacer l'organe de traitement (18) sont conçus de manière à déplacer l'organe de traitement (18) dans le premier et dans le deuxième sens de déplacement (V1, V2) à une vitesse de déplacement constante le long du moule d'impression ou de gaufrage (12), de manière à ce qu'un point d'incidence (50) du faisceau laser (16) se déplace toujours le long de traces hélicoïdales (52) sur la surface du moule d'impression ou de gaufrage (12) malgré le sens de rotation du moule d'impression ou de gaufrage (12) et le sens de déplacement de l'organe de traitement (18).

13. Dispositif selon la revendication 12, **caractérisé en ce que** les dispositifs destinés à mettre en rotation le moule d'impression ou de gaufrage (12) dans les premier et deuxième sens de rotation (D1, D2) comprennent un dispositif d'entraînement en rotation dont le sens de rotation peut être inversé.

14. Dispositif selon la revendication 12 ou 13, **caractérisé en ce que** les dispositifs (26, 28) destinés à déplacer l'organe de traitement (18) dans premier et deuxième sens de déplacement (V1, V2) comprennent une broche (28) et un moteur pas-à-des pas entraînant la broche (28) dans un sens de rotation pouvant être inversé.

15. Dispositif selon l'une des revendications 12 à 14, **caractérisé par** des dispositifs destinés à modifier le sens de lecture dans lequel des données de gravure et/ou des lignes de gravure sont lues depuis une mémoire de données de gravure.
